Europäisches Patentamt

European Patent Office

Office européen des brevets

(11) Publication number: **0 096 459**
**A2**

# (12) EUROPEAN PATENT APPLICATION

(21) Application number: 83302390.6

(22) Date of filing: 27.04.83

(51) Int. Cl.³: **C 08 F 8/00**
**C 08 F 2/24**

(30) Priority: 14.05.82 GB 8214031

(43) Date of publication of application:
21.12.83 Bulletin 83/51

(84) Designated Contracting States:
DE FR GB NL

(71) Applicant: IMPERIAL CHEMICAL INDUSTRIES PLC
Imperial Chemical House Millbank
London SW1P 3JF(GB)

(72) Inventor: Goodrich, John Eric
41 Beech View Road
Kingsley Cheshire WA6 8DF(GB)

(74) Representative: Thomas, Ieuan et al,
Imperial Chemical Industries PLC Legal Department:
Patents PO Box 6
Welwyn Garden City Herts, AL7 1HD(GB)

(54) Polymerisation process.

(57) A process for the preparation of a composition comprising a macromonomer which process comprises polymeris-
ing an olefinic monomer in the presence of a compound
which provides at least one terminal group of the polymer,
optionally converting the aforesaid group into a derivative
thereof, and eliminating the aforesaid group, derivative or
portion thereof from the polymer.

EP 0 096 459 A2

Croydon Printing Company Ltd

# POLYMERISATION PROCESS

This invention relates to a process for the preparation of polymerisable polymers and to the products of such a process.

Processes for the preparation of polymers having one terminal olefinic group through which they can be homo- or co- polymerised (hereinafter referred to for convenience as "macromonomers") are known. For example, US 3,786,116 describes the reaction of a "living" polymer with a suitable vinyl compound to form a macromonomer; US 3,235,626 describes the preparation of a macromonomer by initiating the polymerisation of a monomer with a suitable alkali metal vinyl compound; Nitadori et al (Chemistry Society of Japan, 37th Spring Convention, 1978, Preprints of Lectures page 1278) describe the preparation of a macromonomer by reacting a diamine with divinylbenzene; Ferruti et al (Polymer, 1977, Volume 18, page 387) describe the preparation of a macromonomer by reacting a diamine with a bisacrylamide; and Yamashita et al (Polymer Journal (Japan), 1982, Volume 14, pages 255-260) describe the preparation of a macromonomer by the polymerisation of styrene in the presence of iodoacetic acid followed by end-capping with glycidyl methacrylate.

The processes of US 3,786,116 and US 3,235,626 suffer the disadvantages associated with anionic catalysed polymerisation of olefins, e.g. the restricted range of monomers which can be anionically polymerised and the difficulty of operating anionic polymerisations, such as the extensive purification of solvents and the need for rigorously anhydrous conditions. Nitadori et al's and Ferruti et al's processes also suffer the disadvantages of using organo alkali metal compounds and are more limited than US 3,786,116 and US 3,235,626 in the range of macromonomers that can be prepared thereby. Yamashita et al's process produces a macromonomer in which the terminal olefinic group is attached to the polymer via a hydrolytically labile bond.

We have now found that a macromonomer can be prepared by polymerising a polymerisable olefinic monomer to form a polymer in the presence of a compound which provides substantially at least one terminal group of the polymer and eliminating the aforesaid terminal group, or a derivative thereof or a portion of the group or derivative, from the polymer to form the macromonomer. This process tends not to suffer from the disadvantages hereinbefore mentioned and, additionally, provides macromonomers in which the terminal olefinic group is attached to the polymer chain by a bond whch is hydrolytically stable. Furthermore, macromonomers prepared thereby can be copolymerised with suitable monomers to form copolymers which when used as "comb" stabilisers for aqueous dispersions are more hydrolytically stable than at least many of the "comb" stabilisers which have been used commercially hitherto.

Accordingly, the present invention provides a process for the preparation of a composition comprising a macromonomer which process comprises the steps of (A) polymerising a polymerisable olefinic monomer to form a polymer in the presence of a compound which provides substantially one terminal group per polymer chain, (B) optionally converting the aforesaid group into a derivative thereof, and (C) eliminating the aforesaid group, or the aforesaid derivative, where a derivative is formed or a portion of the aforesaid group or derivative from the polymer to generate a terminal olefinic double bond through which the macromonomer may be homo- or co-polymerised.

It is often preferred that the polymerisation reaction in step (A) is initiated by a free-radical initiator, although we do not exclude the possibility that other suitable initiating means may be used, for example cationic or anionic initiators.

Preferably the compound which is used in step (A) of the process of the present invention to provide the aforesaid terminal group is a chain transfer agent although we do not exclude the possibility that it may be a suitable initiator which is used to initiate the polymerisation of the monomer.

Examples of chain transfer agents which can be used in step (A) of the process of the present invention to provide the aforesaid terminal group, which chain transfer agent may be monofunctional or polyfunctional, include inter alia mercaptans, which may be alkyl e.g. n-butylmercaptan or aryl e.g. mercaptobenzene; disulphides e.g. di-n-butyl disulphide; sulphenyl halides, e.g. benzene sulphenyl chloride; sulphonyl halides, e.g. benzene sulphonyl chloride; and suitable phosphorus compounds. Preferably the chain transfer agent is a sulphur containing compound, more preferably a thiol or disulphide since such compounds have good chain transfer characteristics in free radical polymerisations and the residues thereof are readily oxidised to higher oxidation state derivative, e.g. sulphonium salts, sulphoxides or sulphones, which are readily eliminated from the polymer to generate a terminal olefinic group.

Where a chain transfer agent is used in step (A) of the process of the present invention it is chosen in the light of its ability to provide a high proportion of functional end groups in the polymer produced in step (A). Preferably a chain transfer agent used with a particular monomer in the aforesaid step (A) has, with that monomer, under the conditions employed in step (A), a chain transfer constant ($C_T$) in the range 0.2 to 5.0 and more preferably about 1. However, we do not exclude the possibility that chain transfer agents which have chain transfer constants outside our preferred range may be used.

The chain transfer constant ($C_T$) for a particular monomer/chain transfer agent combination is defined by the equation:

$$\frac{1}{P_N} = \frac{1}{P_{N,O}} + C_T \frac{X}{M}$$

where $P_N$ = number average molecular weight of the polymer obtained in the presence of the chain transfer agent,

$P_{N,O}$ = number average molecular weight of the polymer obtained in the absence of the chain transfer agent,

M       = monomer concentration (moles/litre), and

X       = concentration of chain transfer agent (moles/litre).

It will be appreciated that the chain transfer constant for a particular monomer/chain transfer agent combination will vary with the conditions under which the polymerisaton step (A) in the process of the present invention is carried out.

It will be appreciated that where a chain transfer agent is used in step (A) of the process of the present invention it will be chosen and used under conditions such that it does not substantially reduce the rate of polymerisation in step (A).

Where a chain transfer agent is used in the process of the present invention to provide the terminal group in step (A) it is used in a manner and proportion sufficient to exercise a degree of control over the molecular weight of the polymer and to provide preferably at least 40%, particularly preferably at least 70% and more particularly preferably at least 90% of the polymer chains with a terminal group which is a residue of the chain transfer agent. Suitable molar proportions of chain transfer agent to monomer in the process of the present invention are often in the range 1:5 to 1:5,000, and preferably 1:20 to 1:200.

Any polymerisable olefinic monomer the growing chains of which are capable of undergoing chain transfer with a suitable chain transfer agent to form a polymer at least 40% of the chains of which have a terminal chain transfer residue can be used in the process of the present invention. Examples of such olefinic monomers include acrylic and methacrylic acids; $C_{1-18}$ esters, amides and nitriles of acrylic and methacrylic acids; olefinic hydrocarbons, e.g. styrene and alkyl styrenes, ethylene, propylene, butadiene, methyl pentene; $C_{1-18}$ vinyl esters, e.g. vinyl acetate; vinyl heterocyclic compounds, e.g. 4-vinyl pyridine, N-vinyl pyrrolidones; alkyl and aryl vinyl ketones, e.g. phenyl vinyl ketone; vinyl phosphates; vinyl halides, etc. and mixtures thereof. Particularly useful monomers which can be used in the process of the present invention are acrylates and methacrylates.

Polymerisation of the monomer to form a polymer in step (A) of the process of the present invention may, for example, be carried out in bulk or in the presence of a suitable inert diluent, for example a hydrocarbon, e.g. toluene, in which the polymer is soluble. Typically the polymerisation is effected at a temperature in the range 0°C to 120°C although it will be appreciated that the particular temperature used will be chosen in the light of the monomer, initiator, and chain transfer agent which are used in step (A).

Polymerisation of the monomer in step (A) of the process of the present invention is preferably effected in the presence of an initiator which does not abstract hydrogen from the polymer chain produced in step (A) or from a diluent, where a diluent is employed. However, we do not exclude the possibility of using an initiator which does abstract hydrogen, e.g. a peroxide. More preferably the initiator is an azo compound, e.g. azobisisobutyronitrile or , '-azobis( -cyanovaleric acid).

Where the residue of the chain transfer agent which is bound to the polymer chain is to be converted into a derivative thereof the conversion may be carried out in the presence of a suitable diluent which diluent may be chosen in the light of (a) the reaction used to effect the conversion and (b) the solubility characteristics of the polymer prepared in step (A). Preferably a diluent is used in which the polymer prepared in step (A) is substantially soluble since this often facilitates the conversion step, where a conversion step is employed. For example, where a sulphide residue is being converted into a sulphone, e.g. with m-chloroperbenzoic acid, the diluent may be methylene chloride; where a sulphide residue is being converted into a sulphonium salt, e.g. with diethyl sulphate, the diluent may be acetone. Typically these conversions are effected at a temperature in the range of 0°C to 120°C.

Elimination of the residue of the chain transfer agent or a derivative or a portion thereof from the polymer is preferably effected at a temperature in the range 0°C to 120°C. Whilst we do not exclude the possibility that the elimination may be effected by heat alone, preferably the elimination is effected under basic conditions. The basic conditions include the use of hydroxylic bases, e.g. sodium hydroxide, and non-hydroxylic bases. Examples of non-hydroxylic bases include strained or bicylic amines, e.g. 1,5-diazabicyclo [4,3,0] non-5-ene and 1,4-diazabicyclo [2,2,2] octane. It will be appreciated that choice of suitable basic conditions will depend on inter alia the composition of the terminal groups involved in the elimination and on the macromonomer which is formed. Alternatively, elimination may be effected by suitable radiation or by treating, e.g. by passing down a column, the polymer with, for example, silica, alumina or an ion-exchange resin. The elimination reaction is conveniently effected in solution in a suitable solvent for the polymer and the base, where a base is used, which solvent is often a mixture of organic liquids, e.g. methanol and methyl ethyl ketone, or a mixture of water and one or more organic liquids, e.g. water, methanol and acetone.

The macromonomers produced by the process of the present invention have a degree of polymerisation which lies in the range from a few to tens of thousands and preferably in the range of ten to two hundred. Thus it will be appreciated that the macromonomers may range from so-called oligomers to polymers of very high molecular weight. However, the macromonomers typically have molecular weights in the range 300 to 10000.

The molecular weight distribution of the polymer prepared in the first step of the process of the present invention depends on _inter alia_, the nature and proportion of the chain transfer agent, its method of incorporation, and the nature of the monomer and diluent, where a diluent is used.

Where the residue of the chain transfer agent is converted into a derivative thereof prior to elimination from the polymer, suitable reactions for effecting such a conversion include: oxidation reactions, e.g. oxidation of sulphide to sulphoxide or sulphone; and salt formation, e.g. conversion of sulphides to sulphonium salts.

The macromonomers prepared by the process of the present invention may be useful per se and/or they may be useful as intermediates which may be converted, by physical or chemical means, into useful derivatives thereof. For example, vinyl-ended polymethylacrylate may be hydrolysed under suitable conditions to afford vinyl-ended polyacrylic acid. It will be appreciated that where such conversions are carried out, they are carried out under conditions which do not adversely effect the vinyl end groups.

The macromonomers prepared by the process of the present invention may be used to stabilise a dispersion of in situ formed solid particles in a liquid medium. For example, where a monomer, e.g. styrene, is polymerised in a liquid medium in which the polymer produced therefrom is insoluble, e.g. water, addition of a suitable macromonomer to the polymerisation reaction may produce polymer particles, which are often well defined in size and shape, from which "tails" comprising the macromonomer protrude into and are solvated by the liquid medium. It is believed that the macromonomer is bound to the surface of the polymer particles through its terminal olefinic group.

A macromonomer produced by the process of the present invention may be used to produce copolymers, e.g. by copolymerising a suitable ethylenically unsaturated monomer or mixture of monomers with a macromonomer prepared by the process of the present invention, or by grafting the macromonomer to a suitable polymer, e.g. a suitable polysiloxane or mercapto-containing polymer, or by conversion of the terminal olefinic group of the macromonomer into a suitable derivative, e.g. an epoxide, which may be reacted with a suitable reagent to form a copolymer. Where the macromonomer is copolymerised with a suitable monomer it will be appreciated that the product is often a so-called "comb" polymer.

Accordingly, a further aspect of the present invention provides a process for the preparation of a polymer which process comprises (a) polymerising a composition which comprises at least one macromonomer and optionally at least one ethylenically unsaturated monomer which is copolymerisable therewith, or (b) reacting the macromonomer with a suitable polymer, or (c) converting the terminal olefinic group of the macromonomer into a derivative thereof and reacting the said derivative with a suitable reagent.

Optionally a polymer prepared by the process of the present invention may be modified, typically chemically, e.g. by hydrolysis.

Certain of the copolymers prepared by the polymerisation process of the present invention are useful as stabilisers for dispersions of particles in a liquid, for which use the copolymer needs to be one in which one polymeric component thereof is solvated by the liquid phase of the dispersion and the other component, where the copolymer consists of two polymeric components, is not solvated and is preferentially adsorbed by the particles. In most cases of such use it is the polymeric component provided by the macromonomer which is solvated.

For example a copolymer, prepared by the polymerisation process of the present invention, of styrene and a macromonomer derived from, for example, polyacrylic acid may be used in the emulsion polymerisation of styrene to stabilise latex particles. Moreover, by choice of an appropriate macromonomer, latex particles with stabilising entities containing certain groups, e.g. hydroxylic groups or carboxylic groups may be prepared.

Where the polymers prepared by the polymerisation process of the present invention are used as dispersion stabilisers preferred macromonomers are based on: lauryl acrylate, octyl acrylate, or alkyl styrenes for use in aliphatic hydrocarbons; styrene or methyl methacrylate for use in aromatic hydrocarbons; lower acrylate esters for use in polar organic solvents; acrylamide and methylcrylamides, acrylic and methacrylic acids and salts and N-vinyl pyrrolidone for use in aqueous systems.

Where copolymers are prepared by the polymerisation process of the present invention the ratio of macromonomer to ethylenically unsaturated monomer may lie in a wide range and is typically in the range of 1:99 to 80:20 by weight.

Generally a sufficient amount of macromonomer should be present so that there is at least one macromonomer chain chemically bound to each copolymer chain. Up to about 60% by weight of the macromonomer is preferred.

Copolymerisation of a macromonomer with a suitable comonomer produces a graft-like structure wherein the pendant chains are formed by the macromonomer and the backbone is formed from the olefinic groups in the macromonomer and the comonomer. The distribution of the pendant groups along the backbone is controlled by the reactivity ratios of the macromonomer and comonomer, often the terminal group of the macromonomer is interposed between large segments formed from the comonomer.

The polymerisation process of the present invention may be carried out under conditions well known in the art for the polymerisation of ethylenically unsaturated monomers. For example, where a macromonomer is to be copolymerised with a methacrylate or mixture of methacrylates, the macromonomer and monomer(s) are heated at a suitably elevated temperature, preferably in the presence of a catalyst or initiator such as an organic azo or peroxy compound, and if desired, in solution in a suitable inert liquid which is a solvent for the macromonomer, the comonomer(s) and for the copolymer which is produced. However, the polymerisation process of the present invention may also be effected in bulk, in solution, in aqueous emulsion and in aqueous suspension systems.

The temperature and pressure used in the polymerisation process of the present invention will depend inter alia on the macromonomer, comonomer and catalyst system. Generally the temperature will be between $0^{\circ}C$ and $150^{\circ}C$, preferably from $20^{\circ}C$ to $120^{\circ}C$.

Copolymers made by the polymerisation process of the present invention can be arranged to consist of two molecular components of sharply differing polarity. Thus, where the monomer from which the macromonomer is derived is of a relatively polar nature, the macromonomer may be copolymerised with one or more comonomers which give rise to a polymer backbone of relatively low polarity. Conversely, a macromonomer containing a non-polar chain may be copolymerised with a comonomer(s) of a nature such as to yield a polymer backbone which is relatively highly polar. Such amphipathic graft copolymers are very useful as steric stabilisers in the production of dispersions of particles, especially polymer particles, in liquids in which the particles are insoluble. For this purpose, the stabilising copolymer requires to comprise one component which is solvatable by the liquid of the dispersion, which component forms a steric barrier of solvated chains surrounding each particle. The stabilising copolymer requires additionally to comprise a second molecular component which is not solvatable by the dispersion liquid and has a relative affinity for the particles, this non-solvated component becomes associated with the particles, thus serving to anchor the steric barrier to their surfaces. By means of this barrier the particles are enabled to resist the attraction forces which normally tend to cause them to flocculate or aggregate.

For the production of amphipathic copolymers to be used as steric stabilisers in non-aqueous media of low polarity such as aliphatic hydrocarbons, macromonomers derived from relatively non-polar monomers are use-full, e.g. a long chain alkyl ester of acrylic or methacrylic acid, such as lauryl methacrylate. Such a macromonomer is copolymerised with a more polar comonomer, such as methyl methacrylate, and the resulting copolymer can be used to stabilise particles of, for example, polymethyl methacrylate in an aliphatic hydrocarbon.

Conversely, in order to produce an amphipathic graft copolymer suitable as steric stabiliser in an aqueous medium, a macromonomer which is derived from a polar hydrophilic monomer is used, e.g. vinyl pyrrolidone. Such a macromonomer is copolymerised with a comonomer(s) of lower polarity, e.g. an acrylate or methacrylate. The resulting copolymers can be used as steric stabilisers for dispersions in aqueous media of particles of in situ prepared polymer which is insoluble in water.

The invention is further illustrated by reference to the following examples in which all reference to parts are to parts by weight.

Example 1

This example describes the preparation of a macromonomer according to the present invention.

Step 1

Ethyl acetate (118.8 parts) was purged with nitrogen under reflux for 1½ hours. Solutions of methyl acrylate (86 parts) in ethyl acetate (108 parts), redistilled thiophenol (6.9 parts) in ethyl acetate (10.8 parts), and recrystallised azobisisobutyronitrile (0.43 parts) in ethyl acetate (10.8 parts) were added separately and simultaneously over 4 hours to the purged ethyl acetate at reflux. The reaction mixture was refluxed for 3 hours and volatile material was then removed in vacuo to leave ω-phenylthio polymethyl acrylate as a pale yellow viscous oil (82.8 parts) which was shown by ultra-violet spectometric analysis to have a number average molecular weight of 2400.

Step 2

Aqueous hydrogen peroxide (48 parts of 30% w/v) was added dropwise to a stirred solution of the aforesaid polymer (67.5 parts) in glacial acetic acid (393 parts). The reaction mixture was allowed to stand at ambient temperature for a week. The volatile material was removed in vacuo to leave $\omega$-phenylsulphonyl polymethyl acrylate as a yellow viscous liquid (62.8 parts) which was shown by ultra-violet spectrometric analysis to have a number average molecular weight of 2300.

Step 3

1,5-Diazabicyclo(4,3,0)non-5-ene (9 parts) was added under nitrogen to a stirred solution of the phenylsulphonyl-ended polymer (44 parts) in anhydrous toluene (166 parts). The reaction vessel was sealed and the reaction mixture was stirred at ambient temperature for 24 hours. A precipitate formed and was filtered off under nitrogen. The filtrate was evaporated in vacuo to leave $\omega$-(1-carbomethoxyethenyl) polymethyl acrylate as a brown viscous oil (43 parts) which was shown by proton magnetic resonance spectrometric vinyl analysis to have a number average molecular weight of 2750 and by gel permeation chromatography to have a number average molecular weight of 2500. Comparison of these number average molecular weights indicates that 93% of the macromonomer chains have terminal vinyl groups.

Example 2

This example illustrates the preparation of a macromonomer according to the present invention.

The procedure of Step 1 of Example 1 was repeated except that 66.6 parts of ethyl acetate were used instead of 118.8 parts, 2-ethylhexyl acrylate (88 parts) in purified ethyl acetate (51.6 parts) was used instead of methyl acrylate (86 parts) in ethyl acetate (108 parts), 2.58 parts instead of 6.9 parts of redistilled thiphenol were used, and 0.22 parts instead of 0.43 parts of recrystallised azobisisobutyro

nitrile were used. ω-phenylthio poly 2-ethylhexyl acrylate was obtained as a colourless viscous oil (81.8 parts) of number average molecular weight 3,800 (UV spectrometry).

The procedure of Step 2 of Example 1 was repeated except that the 2-ethylhexyl acrylate polymer (56 parts) in glacial acetic acid (314.7 parts) were used instead of the methyl acrylate polymer (67.5 parts) in glacial acetic acid (393 parts) and 22 parts instead of 48 parts of aqueous hydrogen peroxide (30% w/v) were used. ω-phenylsulphonyl poly 2-ethylhexyl acrylate was obtained as a colourless viscous oil (52.5 parts) of number average molecular weight 3600 (UV spectrometry).

The procedure of Step 3 of Example 1 was repeated except that phenylsulphonyl polyethylhexyl acrylate (51 parts) in anhydrous toluene (118.2 parts) was used instead of phenylsulphonyl polymethyl acrylate (44 parts) in anhydrous toluene (166 parts) and 6.9 parts instead of 9 parts of 1,5-diazabicyclo(4,3,0)non-5-ene were used. ω-(1-carbo(2-ethylhexyloxy)-ethenyl)-poly 2-ethyl hexyl acrylate was obtained a pale orange viscous oil (49.5 parts), which was shown by proton magnetic resonance spectrometry to have a number average molecular weight of 3600 and by gel permeation chromatography to have a number average molecular weight of 2800. Comparison of these number average molecular weights indicates that 78% of the macromonomer chains have terminal vinyl groups.

Example 3

The following example illustrates the preparation of a macromonomer according to the present invention.

The procedure of Steps 1 and 2 of Example 1 was repeated to give ω-phenylsulphonyl polymethyl acrylate.

1,5-Diazabicyclo(4,3,0)non-5-ene (2.5 parts) was added under nitrogen to a stirred solution of the aforementioned - phenylsulphonyl polymethyl acrylate (11.3 parts) in anhydrous toluene (50 parts). The resulting solution was heated at 70°C under nitrogen (24 hours). The mixture was cooled to ambient temperature and the insoluble material removed. The toluene solution was concentrated in vacuo then passed through a column containing silica gel and eluted with methylene chloride. The volatile materials were removed from the eluate in vacuo to give ω-(1-carbomethoxyethenyl) polymethyl acrylate as an orange viscous gum (6 parts). The number average molecular weight based on proton magnetic resonance spectrometric vinyl analysis was 2150 and by gel permeation chromatography to be 2400. The absence of polymer containing terminal phenylsulphonyl groups was confirmed by ultraviolet spectrometry.

Example 4

This example illustrates the preparation of a macromonomer according to the present invention.

The procedure of Steps 1 and 2 of Example 1 was repeated to give ω-phenylsulphonyl polymethyl acrylate. To a stirred solution of this material (45.6 parts) in a mixture of purified methanol (250 parts) and purified ethyl methyl ketone (250 parts) pre-purged with nitrogen, was added with vigorous stirring powdered anhydrous sodium carbonate (21.2 parts). The mixture was then heated under reflux with vigorous stirring for a week. The resulting suspension was cooled and the solid material removed by centrifugation. Removal of volatiles from the supernatant liquid afforded ω-(1-carbomethoxyethenyl) polymethyl acrylate as an orange viscous gum (36.7 parts). The number average molecular weight based on nuclear magnetic resonance spectrometric vinyl analysis was 1700.

Example 5

The following example illustrates the formation of a terminal vinyl macromonomer directly from a terminal phenylthio macromonomer according to the present invention.

The procedure of Step 1 of Example 1 was repeated to give a ω-phenylthio polymethyl acrylate of number average molecular weight 2400.

To a solution of the aforementioned polymer (24 parts) in purified toluene (200 parts), prepurged with nitrogen, was added 1,5-diazabicyclo-(4,3,0) non-5-ene (5 parts). The solution was covered with nitrogen and heated under reflux (2 days). The volatile materials were removed in vacuo and as much of the residue as possible was dissolved in toluene (40 parts). The soluble fraction was then passed down a column of silica gel. Elution with methylene chloride followed by removal of volatiles from the eluate yielded $\omega$-(1-carbomethoxyethenyl) polymethyl acrylate as an orange viscous gum (16 parts). The number average molecular weight by proton magentic resonance vinyl analysis was 5550.

Example 6

This example illustrates the use of a macromonomer of the present invention in the preparation of a comb homo-polymer.

A mixture of $\omega$-(1-carbomethoxyethenyl) polymethyl acrylate prepared in Example 1 (5.1 parts), methyl acrylate (8.6 parts) and ethyl acetate (22.6 parts) was purged with nitrogen for one hour with vigorous stirring. Azobisisobutyronitrile (0.2 parts) was added and the solution was heated with stirring under nitrogen for 3 hours at 60°C and then for 4 hours at reflux. Removal of volatile material at reduced pressure and then under vacuum at 90°C left a pale brown viscous gum (12.8 parts).

The gum had a reduced viscosity in ethyl acetate (1% w/v) of 0.53 and a number average molecular weight, by gel permeation chromatography, of 12,600.

By way of comparison the above procedure was repeated except that $\omega$-phenylthio polymethylacrylate was used instead of $\omega$-(1-carbomethoxyethenyl) poly-

methyl acrylate. The product had a reduced viscosity of 0.35 in ethyl acetate (1% w/v), and a number average molecular weight, by gel permeation chromatography, of 3,750.

Example 7

This example describes the use of a macromonomer of the present invention in the preparation of a "comb" polymer.

A mixture of ω-(1-carbomethoxyethenyl) polymethyl acrylate (8.0 parts), prepared as in Example 1, styrene (17.9 parts), toluene (43.4 parts) and azobisisobutyronitrile (0.4 parts) was purged with nitrogen for 1.5 hours and then heated with stirring at 80°C for 7 hours. On cooling a two-layer product was obtained. The upper layer was separated from the lower oily layer and the volatile material was removed from the upper layer in vacuo at 40°C to leave an opaque friable solid.

Addition of acetonitrile to a portion of the friable solid gave an opalescent solution; the polyacrylate teeth are soluble in the acetonitrile but the polystyrene backbone is not. Addition of cyclohexane to the opalescent solution gave an emulsion which was stable for several hours; acetonitrile and cyclohexane are immiscible but the teeth of the comb polymer are soluble in acetonitrile and the backbone of the comb polymer is soluble in cylcohexane such that an emulsion is formed.

By way of comparison the above procedure was repeated except that ω-phenylthio polymethyl acrylate (8 parts, number average molecular weight 1950) was used instead of ω-(1-carbomethoxyethenyl)polymethyl acrylate.

Addition of the product to a mixture of acetonitrile and cyclohexane did not produce emulsification.

Example 8

This example illustrates the preparation of a comb polymer which has polyacrylic acid teeth.

The comb polymer prepared in Example 7 was suspended in a solution of toluene-4-sulphonic acid (1.23 parts) in a mixture of acetic acid (52.5 parts) and water (4.1 parts). The suspension was heated under reflux with vigorous stirring for 14 days. On cooling, the supernatant liquid was decanted, the residue was stirred with water then collected by filtration, washed with water then dried overnight in vacuo at 70°C. The pale brown product (4.7 parts) was found to be insoluble in chloroform but soluble in acetone with formation of a faint haze. Proton magnetic resonance and infra red spectroscopy confirmed that the product was a copolymer of acrylic acid and styrene.

Example 9

This example illustrates the use of a macromonomer of the present invention in the preparation of a "comb" polymer.

A mixture of ω-(1-carbo(2'-ethylhexyloxy)-ethenyl) polyethylhexyl acrylate (9.0 parts), prepared in Example 2, 2-ethylhexyl acrylate (18.4 parts), ethyl acetate (22.5 parts) and azobisisobutyronitrile (0.20 parts) was purged with nitrogen for 1.5 hours then heated under nitrogen at reflux for 6 hours. Volatile material was removed from the resulting clear liquid in vacuo at 40°C to leave a comb polymer as a viscous oil which exhibited substantially no vinylic groupings in its infra-red spectrum. The reduced viscosity of the oil in ethyl acetate (1% w/v) at 20°C was 0.27, and its number average molecular weight by gel permeation chromatography was 18,600.

By way of comparison the above procedure was repeated except that ω-phenylthio poly 2-ethylhexyl acrylate (9 parts, number average molecular weight 2700) was used instead of ω-(1-carbo(2'-ethylhexyloxy) ethyenyl)poly-2-ethylhexyl acrylate. The product of the procedure had a number average molecular weight by gel permeation chromatography of 4100 and a reduced viscosity in ethyl acetate (1% w/v) at 20°C of 0.15.

Example 10

This example describes the preparation of a macromonomer according to the present invention.

Step 1

The following solutions were prepared:

A.      Methyl methacrylate (50 parts) in toluene (87 parts).

B.      4-(2'bromoethyl)mercaptobenzene (5.43 parts) in dry purified toluene (17.3 parts).

C.      Azo bis isobutyronitrile (0.25 parts) in a mixture of ethyl acetate (3.6 parts) and toluene (13.8 parts).

A, B and C were purged with nitrogen for 1 hour, then mixed and heated at 80°C for 7 hours with vigorous stirring in a nitrogen atmosphere. The volatile materials were then removed in vacuo to yield ω-[4-(2'-bromoethyl)phenylthio] poly methyl methacrylate as a white friable solid (50.2 parts). The number average molecular weight was 2050 (UV spectrometry). The bromine content of the polymer was 4.30%.

Step 2

The procedure of Step 2 of Example 1 was repeated except that the aforesaid methyl methacrylate polymer (634.5 parts) in glacial acetic acid (238 parts) was used instead of the methyl acrylate polymer (67.5 parts) in glacial acetic acid (393 parts), and 14 parts instead of 48 parts of aqueous hydrogen peroxide (30% w/v) were used. ω-[4-(2'-bromoethyl)phenylsulphonyl] poly methyl methacrylate (31.5 parts) was obtained as a white friable solid. The number average molecular weight was 1410 (UV spectrometry). The bromine content of the polymer was 5.56%.

Step 3

1,4-Diazobicyclo [2,2,2] octane (7.8 parts) was added under nitrogen to a stirred solution of the 4-(2'bromoethyl) phenylsulphonyl ended polymer (25 parts) in anhydrous tetrahydrofuran (250 parts). The reaction vessel was sealed and the reaction mixture stirred at ambient temperature for 48 hours. The volatile materials were removed in vacuo then the residue dissolved as far as possible in anhydrous toluene (250 parts). The resulting suspension was filtered, the residue washed with toluene and the filtrate evacuated, initially at 30°C and finally at 80°C (2 hours) to remove the solvent. ω-(4-Ethenylphenylsulphonyl) poly methyl methacrylate (24.5 parts) was obtained as a pale yellow friable solid. This was shown by proton magnetic resonance spectrometric vinyl analysis to have a number average molecular weight of 5250. Gel permeation chromatography indicated a number average molecular weight of 2050. Comparison of these number averages molecular weights indicates that 40% of the macromonomer chains have terminal vinyl groups.

## CLAIMS

1.    A process for the preparation of a composition comprising a macromonomer which process comprises the steps of

(A)    polymerising a polymerisable olefinic monomer to form a polymer in the presence of a compound which provides substantially one terminal group per polymer chain;

(B)    optionally converting the terminal group into a derivative thereof; and

(C)    eliminating the terminal group or a portion thereof or the derivative, where a derivative is formed, or a portion thereof from the polymer to generate a terminal olefinic double bond through which the macromonomer may be homo- or co-polymerised.

2.    A process as claimed in Claim 1 in which the said compound is a chain transfer agent.

3.    A process as claimed in Claim 2 in which the chain transfer agent is a sulphur containing compound.

4.    A process as claimed in Claim 2 wherein the chain transfer agent has a chain transfer constant in the range 0.2 to 5.0.

5.    A process as claimed in Claim 2 wherein the molar ratio of chain transfer agent to monomer is in the range 1:5 to 1:5000.

6.    A process as claimed in Claim 1 wherein the monomer is an acrylate or methacrylate.

7.    A process as claimed in Claim 1 wherein the conversion Step (B) comprises an oxidation reaction or salt formation.

-23-

8.      A process as claimed in Claim 1 wherein the elimination Step (C) is carried out under basic conditions.

9.      A macromonomer prepared by a process as claimed in any one of the preceding claims.

10.     A polymer prepared from a macromonomer as claimed in Claim 9.

11.     A polymer of a macromonomer as claimed in Claim 9 and a suitable monomer copolymerisable therewith.

12.     Use of a copolymer as claimed in Claim 11 as a dispersion stabiliser.